Europäisches Patentamt

European Patent Office

Office européen des brevets

(19)

(11) EP 0 811 197 B1

(12) **EUROPEAN PATENT SPECIFICATION**

(45) Date of publication and mention
of the grant of the patent:
**06.08.2003 Bulletin 2003/32**

(51) Int Cl.⁷: **G06F 13/00**, G06F 1/32

(86) International application number:
**PCT/US95/02305**

(21) Application number: **95911910.8**

(22) Date of filing: **24.02.1995**

(87) International publication number:
**WO 96/026488 (29.08.1996 Gazette 1996/39)**

(54) **SYSTEM MANAGEMENT SHADOW PORT**

ZUSÄTZLICHES TOR FÜR SYSTEMVERWALTUNG

PORT AUXILIAIRE DE GESTION DE SYSTEME

(84) Designated Contracting States:
**DE FR GB**

(43) Date of publication of application:
**10.12.1997 Bulletin 1997/50**

(73) Proprietor: **INTEL CORPORATION**
**Santa Clara, CA 95052 (US)**

(72) Inventors:
• **DATTA, Sham**
**Santa Clara, CA 95051 (US)**
• **JOSHI, Jayesh**
**Santa Clara, CA 95054 (US)**
• **KARDACH, James, P.**
**San Jose, CA 95128 (US)**

(74) Representative: **Wombwell, Francis et al**
**Potts, Kerr & Co.**
**15, Hamilton Square**
**Birkenhead Merseyside CH41 6BR (GB)**

(56) References cited:
**US-A- 5 131 082**      **US-A- 5 150 467**
**US-A- 5 237 692**      **US-A- 5 283 792**
**US-A- 5 353 414**      **US-A- 5 404 546**

## Description

BACKGROUND OF THE INVENTION

FIELD OF THE INVENTION

The present invention relates to a power management architecture scheme in a computer system having a plurality of bus masters and at least one bus slave both being coupled to a system bus. More specifically, the present invention relates to a shadow port and corresponding register used for accessing data, address and status information stored in a plurality of shadow registers pertaining to a most recent input/output ("I/O") bus cycle in order to enable a system management software application to perform its intended purpose.

BACKGROUND OF THE FIELD

It is becoming a necessity for many companies to use portable and laptop computers in their daily business activities. As a result, the portable and laptop computer markets are becoming quite profitable and highly competitive within the computer industry. Since portable and laptop computers are becoming more prevalent in the marketplace, there exists a crucial need for efficient power management architecture schemes. This is due to the fact that portable and laptop computers are commonly powered by limited power sources (such as batteries) and thus, power should be conserved wherever possible for reliability and economic reasons.

Conventional power management schemes are generally accomplished by monitoring and controlling power to bus slaves. A bus slave is any type of device that receives, but is incapable of initiating bus cycles, contrary to a bus master which can gain control of the system bus and also initiate bus cycles. Power management is mostly directed toward I/O bus slave devices since such devices generally require a large amount of power to operate in IBM PC/AT compatible computers.

For example, it is commonly known that power must be supplied to an electric motor of a floppy disk drive for the disk drive to operate. However, when the floppy disk drive is not being utilized, the computer system is wasting its limited power supply by unnecessarily powering the disk drive motor. To minimize such waste, a conventional computer system could be designed to discontinue supplying power to the floppy disk drive motor. Unfortunately, such a design would cause its software application to unnecessarily fail if the application sought access to the floppy disk drive which was "powered-off".

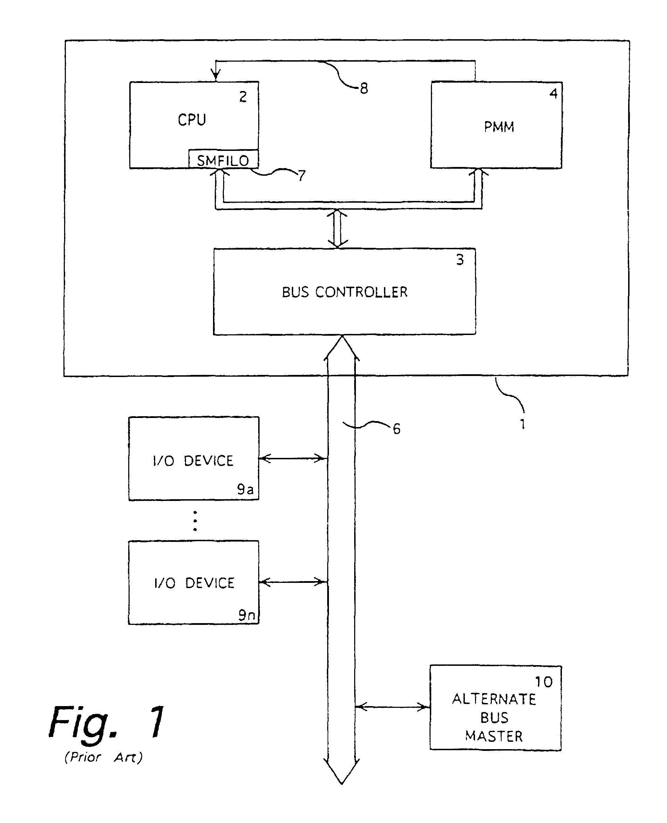

In response to the obvious need for effective power management, Intel developed an Intel Architecture Microprocessor 1 comprising a central processing unit ("CPU") 2, a bus controller 3 and a power management macro ("PMM") 4, coupled together by an internal system bus 5 as shown in **Figure 1.** The PMM 4 is a special hardware block which provides I/O traps for trapping any access requests by the CPU 2 to any I/O device 9a-9n which has been powered-off and generates a System Management Interrupt ("SMI") signal by activating a SMI control signal line 8 being coupled between the PMM 4 into the CPU 2.

The PMM 4 is capable of generating two kinds of SMIs; namely, a synchronous SMI and an asynchronous SMI. The synchronous SMI occurs due to an internal interrupt, such as a trap, while the asynchronous SMI occurs at any time due to a specific event that requires service before proceeding.

In general, the PMM 4 is used to monitor the computer system for events requiring a change in power status (i.e., whether an I/O device needs to be "powered-off" or "powered-on"). If such an event is detected, the PMM 4 activates the SMI control signal line 8 which acts as a request signal for the CPU 2 to enter into a System Management Mode ("SMM"). SMM is a special mode allowing the CPU 2 to operate in a special environment completely isolated from other software applications. Once the SMM commenced, an internal software service routine, hereinafter referred to as a "SMI handler routine", services the SMI by either powering on or powering off the I/O device. The information necessary to determine whether to "power-on" or "power-off" the I/O device is contained in a SMM status register (not shown) within the PMM 4. After the SMI handler routine has finished servicing the SMI, the SMM would be exited to allow the software application to continue.

The Intel Architecture Microprocessor 1 is coupled to a plurality of bus slaves, preferably I/O devices 9a-9n. All of these devices are coupled together through a peripheral component interconnect bus (the "PCI bus") 6. The CPU 2 incorporated within the Intel Architecture Microprocessor 1 includes a system management first-in last out register (a "SMFILO register") 7 operating in accordance with a first-in, last-out storage scheme. The SMFILO register 7 keeps track of all the I/O cycles generated by the CPU 2. The SMI handler routine reads the SMFILO register 7 and based on the contents thereof, determines which I/O device 9a-9n cannot be accessed, what data was being written, etc. Based on this information, it can decide whether to re-start the I/O bus cycle when the particular I/O device is accessible.

However, one problem associated with the conventional PMM 4 is that it does not manage power consumption for I/O devices being controlled by an alternate bus master 10, but rather, for only I/O devices controlled by the CPU 2. As shown in **Figure 1,** the SMFILO register 7 is incorporated within the CPU 2 within the Intel Architecture Microprocessor 1, and thus, the SMFILO register 7 does not store any information pertaining to I/O bus cycles generated by the alternate bus master 10 in the computer system. As a result, if an I/O trap occurs for the alternate bus master 10, the SMI handler routine does not have enough information about to the I/O bus cycle to reliably determine whether to restart it. Such unreliability has caused many software applications to unnecessarily fail. Moreover, I/O port emulation using traps is not possible for alternate master accesses.

## SUMMARY OF THE INVENTION

In light of the foregoing, it can be appreciated that there exists a bona fide need for a power management system capable of storing the contents of a bus cycle generated by any bus master; namely, its data and address.

It is also an object of the present invention to provide a power management scheme which is inexpensive to implement.

It is another object of the present invention to provide a power management scheme which would manage power for each I/O device on the system bus, regardless of which bus master controls the system bus.

Yet it is another object of the present invention to prevent unnecessary failure of a computer system's software application.

These and other objects of the present invention are provided by a shadow port and a corresponding register used for transferring data, address and status information concerning a preceding I/O bus cycle before a system management interrupt is initiated. The shadow port is an address location of a register having a predetermined number of bits, wherein the register is capable of accessing address, data and status information stored in a plurality of system management shadow registers through successive bus cycles.

The present invention further includes a method for transferring data, address and status information concerning a preceding I/O bus cycle. Such method primarily comprises four steps. A first step is to unlock memory space allocated to registers within the PMM (i. e, the PMM register space) since the PMM register space is normally locked for system security. A second step is to read status information from at least one status register within the plurality of system management shadow registers in order to ascertain the cause of the system management interrupt. Thereafter, the address information within the system management shadow registers is read to find out details pertaining to the trapped I/O cycle, such as, for example the CPU accessing a powered-off disk drive, requiring the PMM to intervene. The final step is to retrieve data from the system management shadow registers one byte at a time. The reading of the status information, address and data is accomplished by the corresponding register repeatedly accessing the system management shadow registers through the shadow port.

## BRIEF DESCRIPTION OF THE DRAWINGS

The objects, features and advantages of the present invention will become apparent from the following detailed description of the present invention in which:

FIGURE 1 is a block diagram of a conventional prior art Intel Architecture Microprocessor comprising a CPU, a memory controller and a bus controller, wherein the CPU contains a SMFILO register.

FIGURE 2 is a block diagram of the present invention featuring data and control lines.

FIGURE 3 is detailed view of System Management Shadow Port register.

FIGURE 4 is a timing diagram of the operations of a computer system incorporating the system management shadow port and the system management shadow port register.

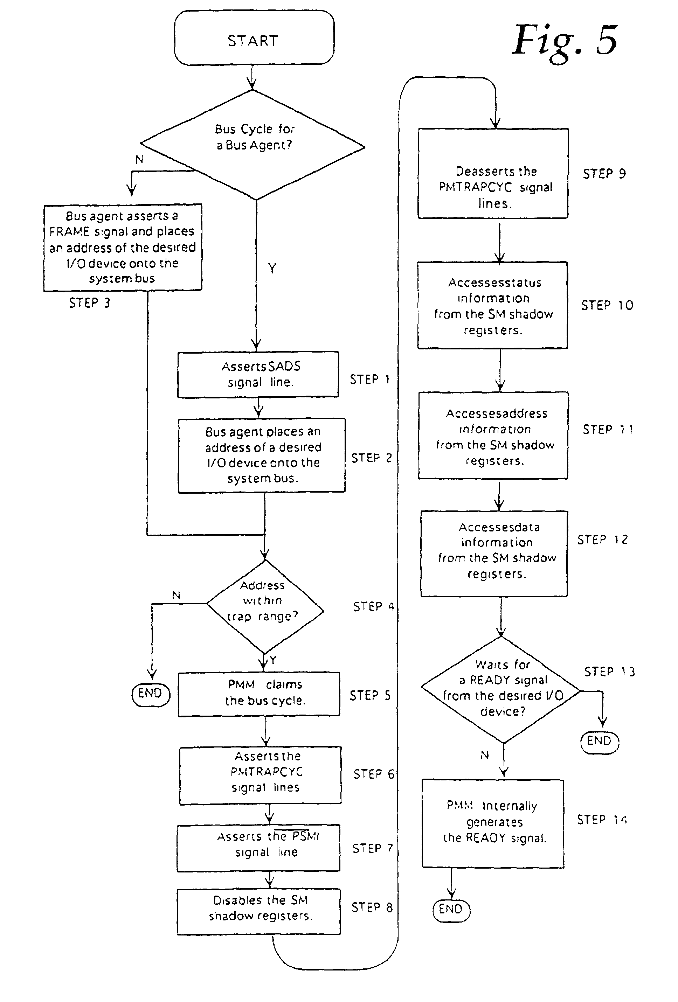

FIGURE 5 is a flowchart on the operations of the System Management Shadow Port.

## DETAILED DESCRIPTION OF THE INVENTION

The present invention relates to an apparatus and method for managing power in a computer system. More particularly, the present invention relates to a port and corresponding register used to transfer data, address and status information concerning a most recent I/O bus cycle before initiating and servicing a system management interrupt ("SMI"). In the following detailed description, numerous specific details are set forth, such as a bit width of the power management shadow port register. It is apparent, however, to one skilled in the art that the present invention may be practiced without incorporating such details. In other instances, well known elements, devices, process steps and the like are not set forth in detail in order to avoid unnecessarily obscuring the present invention. Moreover, while the present description discusses monitoring I/O bus cycles, it is also contemplated that the present invention may be designed to monitor memory bus cycles pertaining to memory devices such as DRAM, SRAM, etc.

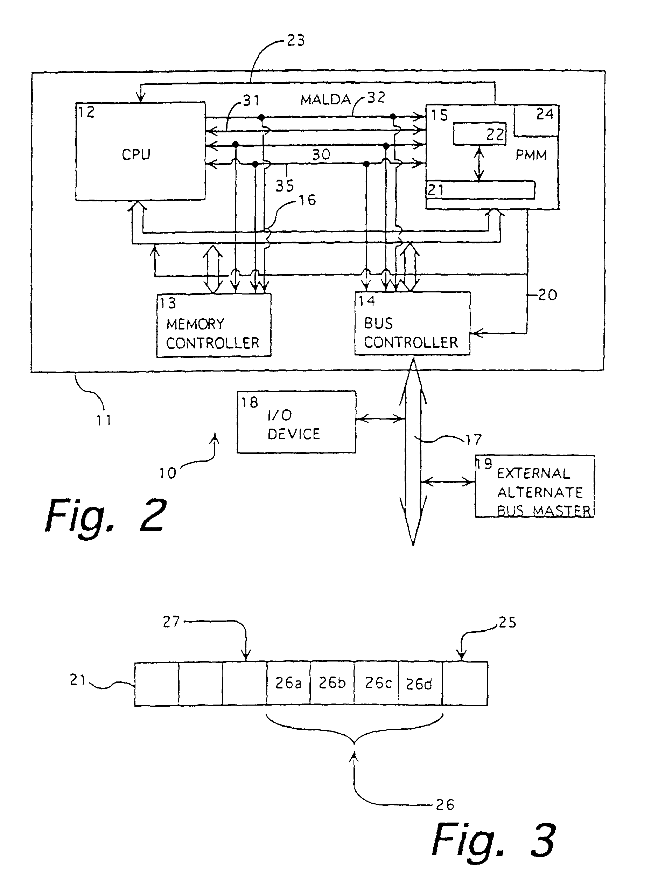

Referring to **Figure 2,** it illustrates a computer system and a few of its associated data and control signal lines incorporating a single chip integration 11 usable in all ranges of portable and laptop computers as well as low end desktop computers. The chip integration comprises a CPU 12, a memory controller 13, peripheral component interconnect ("PCI") bus controller 14 and the Power Management Macro ("PMM") 15. Each of the above are coupled to an internal multi-master system bus 16.

The PCI bus controller 14 is further coupled to the PCI bus 17 to enable communications between at least one I/O device 18 and one bus master, such as the CPU 12, internal alternate bus master (e.g., memory controller 13) or an external alternate bus master (e.g., an external DMA Controller) 19, hereinafter generically referred to as a " bus agent". Although the present disclosure discusses the implementation of the single chip integration 11, it is contemplated that the present invention may be practiced as a combination of discrete components coupled together by a bus in order to share information.

Accordingly, since both the CPU 12 and the internal and external alternate bus masters are able to control the internal system bus 16, the conventional architectural scheme for monitoring bus cycles generated by the CPU 12, as shown in **Figure 1,** would not be able to monitor a bus cycle from the alternative bus master 19. However, the present invention could monitor these bus cycles.

The present invention relates to a system management shadow port (not shown) residing in an address location in the PMM's index address space. The shadow port enables a corresponding register, namely, a system management shadow port register (the "SM_SHD_PORT register") 21, to read or store data, address and status information from a plurality of system management shadow registers (hereinafter referred to as the "SM shadow registers") 22 through successive read and write cycles, respectively. As a result, the SM shadow registers 22 can be accessed through a common port (i.e., the shadow port) rather than having to be individually accessed through multiple ports.

The SM shadow registers 22 are a bank of transparent latches with enables which are placed within the PMM 15. The inputs of these latches are coupled to the internal system bus 16, byte enable pins, etc. The latches are enabled to capture data address and status information at the end of every I/O cycle via internal logic. This is how "shadows" (i.e., copies of information) of subsequent I/O cycles are maintained.

When the SMI is generated, the internal control logic does not enable the latches anymore. Thus, a shadow of the I/O cycle before the SMI is maintained for the SMI handler routine to utilize. The latches can be reenabled to capture I/O cycles after the SMI handler routine has finished reading the SM shadow registers 22.

In the present embodiment, a PCI bus controller 14 forwards any transactions found on the PCI bus 17 onto the internal bus 16. Hence the SM shadow registers 22 can latch data pertaining to any cycle from either the PCI bus 17 or the internal bus 16. Hence, the PMM 15 would be able to monitor the bus cycles generated by every bus master.

Referring now to **Figure 3,** the SM_SHD_PORT register 21 is illustrated having a bit width of eight bits in order to enable data, physical addresses and status information to be stored therein. As previously stated above, the SM_SHD_PORT register 21 may be designed to be any bit width or even a plurality of registers so as to be able to store information concerning not only the most recent bus cycle, but also a number of prior bus cycles.

As in conventional system management schemes, SM shadow registers 22, such as the SMFILO register 7 shown in **Figure 1**, continue capturing information pertaining to most recent I/O bus cycle until the SMI is generated by the PMM 15. The SMI is generated by activating a $\overline{PSMI}$ signal line 23 coupled between the PMM 15 and the CPU 12 so as to disable (i.e., freeze) the SM shadow registers 22 while the SMI handler routine is servicing the SMI. The SMI handler routine can then store such information in a System Management Random Access Memory ("SMRAM") 24, and allow the software application to continue.

For each I/O bus cycle captured, the SM shadow registers 22 store seven bytes of information, including (i) up to four bytes each having eight bits of data (D0-D31), (ii) two eight-bit bytes of I/C address (A0-A15) and (iii) a status byte which includes a valid bit, a plurality of byte enable bits and a write/read bit. These shadow registers are serially accessed through the SM_SHD_PORT register 21 one byte at a time during successive read cycles.

As illustrated in **Figure 3**, the status byte stored in the SM shadow registers 22 is first read into the SM_SHD_PORT register 21. The status byte is read first because it contains information about which data bytes are valid and if the particular I/O cycle field is valid. The bits are described as follows:

Bit 0 is a VALID bit 25 which indicates if this bus cycle field contains valid data. The VALID bit 25 is set to indicate that the SM shadow registers 22 contain valid data, but is only set for I/O trap SMIs caused by CPU accesses. The VALID bit 25 remains inactive when the data stored in the SM shadow registers 22 is from a non-CPU master bus cycle.

Bits 1-4 are four byte enable bits 26a - 26d referred to as $\overline{BE0}$ through $\overline{BE3}$ respectively. The byte enable bits 26a - 26d are designed to be active-low and are primarily used to indicate whether data read from the SM shadow registers 22 during each of a second, third, fourth and fifth read cycle contained valid data. If any of these bits are set to be logic "high", then its corresponding data byte contains invalid data.

The sixth bit referred to as "Bit 5" is a read/write bit 27 which indicates whether the stored I/O bus cycle generated by the bus master was a write or a read instruction. In the present example, the read/write bit 27 is set when the I/O bus cycle was operating as a write instruction but could easily be altered. Such "read" or "write" information is important because if the bus cycle was a read bus cycle to a device which is powered-off, the data is most likely invalid. Write instructions, however, usually transfer valid data.

Bits 6-7 are reserved to be used in another unrelated application.

When the I/O trap range is programmed, all accesses to that range are trapped, regardless of bus ownership. The I/O trap range is a range of I/O addresses to which a particular device responds. The PMM 15 is able to determine whether the CPU 12 controls the internal system bus 16 at the time of the trap by sampling the Memory Controller's Hold Acknowledge MHLDA 32 output. The MHLDA signal 32 acknowledges that the CPU 12 has given up control of the internal system bus 16. In the present architecture, if the CPU 12 is not in control of the internal system bus 16, any cycles currently on the internal system bus 16 may be generated by any number of other bus agents, including the external alternate bus master 19.

If a bus cycle being trapped on the external system bus 17 is generated by the external alternate master 19, then the PCI bus controller 14 is notified by an active low PMM select signal, referred to as the $\overline{\text{PMMSEL}}$ signal 20 and places the bus cycle onto the internal system bus 16 so that the PMM 15 can shadow it. Thus, the PMM 15 can shadow any I/O bus cycles within the computer system 10 in its SM shadow registers 22. Since it also knows whether the internal system bus 16 is controlled by the CPU 12 or any alternate bus master at the time of the trap, it can accordingly set the "Valid" bit. Now, the SMI handler routine can figure out where the trapped cycle originated, and decide whether or not to re-start the cycle. Only the CPU 12 has automatic I/O re-start capability.

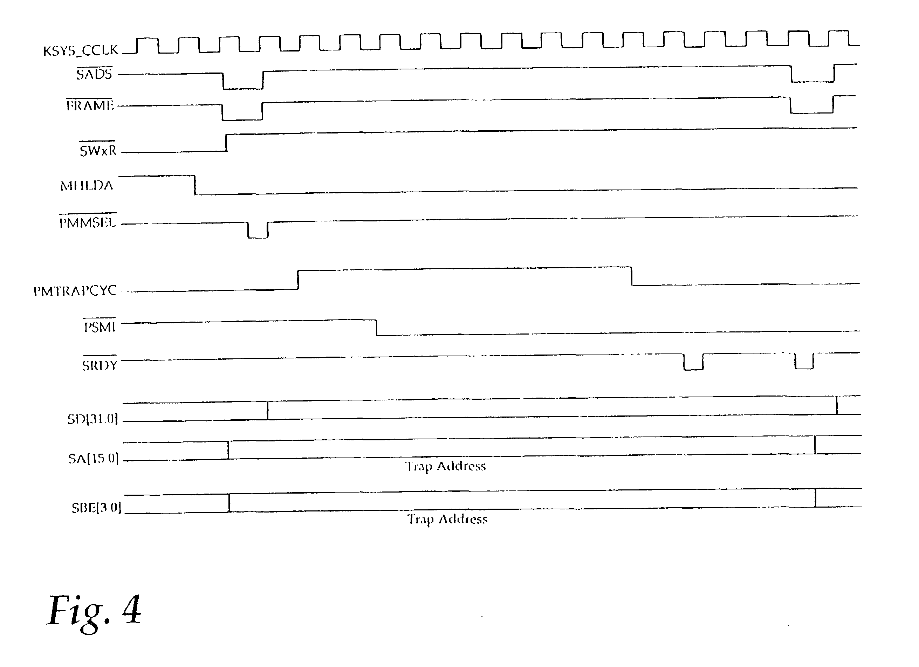

The following is a detailed description of the operations of the power management architecture scheme trapping the internal system bus cycle pursuant to a particular design of the embodiment in **Figure 2** after the PMM register space is unlocked. As illustrated in **Figure 2** in combination with the timing diagram in **Figure 4**, to commence the each bus cycle, either the CPU 12 or the internal alternate bus master 13 asserts an address strobe $\overline{\text{SADS}}$ 30 to initiate a cycle (Step 1). Concurrently, an address of the I/O device that the bus agent is attempting to access is placed on the internal system bus 16 (Step 2). The address strobe signal $\overline{\text{SADS}}$ 30 simply affirms that the address is valid. If the external alternate bus master 19 desires to initiate the bus cycle, it does not assert the address strobe $\overline{\text{SADS}}$ 30; rather, it places an active $\overline{\text{FRAME}}$ 31 signal in combination with the address of the I/O device onto the PCI bus 17 which, in turn, is placed on the internal system bus 16 (Step 3).

After the I/O trap mechanisms determine that the address falls within one of the trap ranges (step 4), the PMM 15 claims the bus cycle (Step 5). Thereafter, the PMM 15 asserts a PMTRAPCYC signal 35, which when active, disables the bus agent from prematurely terminating the bus cycle (Step 6). This guarantees that the bus agent will not start a new cycle while the bus cycle is disabled. Thereafter, the PMM 15 generates a SMI request signal which is inputted into the CPU 12 through the $\overline{\text{PSMI}}$ signal 23 in order to invoke the SMI handler routine (Step 7). At this time, the PMM 15 disables the SM shadow registers 22 for use by the SMI handler routine (Step 8).

After allowing enough time for the CPU 12 to recognize the SMI, PMTRAPCYC signal 35 is deasserted and the bus cycle is terminated (Step 9). This guarantees that the bus agent does not start a new cycle before the SMI handler routine commences; otherwise, if a new cycle is mistakenly executed, then the shadowed data becomes invalid.

The SMI handler routine accesses information from the plurality of SM shadow registers 22 through the system management shadow port in combination with the SM_SHD_PORT register 21 by first reading status information from at least one status register within the plurality of SM shadow registers 22 in order to ascertain the cause of the system management interrupt (Step 10). Thereafter, address information within the SM shadow registers 22 is read to determine details pertaining to the trapped I/O cycle, such as, which device is powered-off (Step 11). Then, data bytes are retrieved from the SM shadow registers 22 sequentially (Step 12). The reading of the status information, address and data is accomplished by the SM_SHD_PORT register 21 repeatedly accessing the SM shadow registers through the system management shadow port.

Once the SMI has been serviced by the SMI handler routine in order to "power-on" the selected I/O device, the selected I/O device will generate a $\overline{\text{SRDY}}$ signal (Step 13). However, if the $\overline{\text{SRDY}}$ signal has not been returned within a predetermined time period, the PMM 15 will generate the $\overline{\text{SRDY}}$ signal, assuming that the selected device is permanently powered-off or the like (Step 14).

The present invention described herein may be designed in many different methods and using many different components. The present invention has been described in terms of various embodiments. The invention is defined by the following claims.

**Claims**

1.    A power management device operating in combination with a software application for monitoring access request signals on a system bus from a bus master to a bus slave, said power management device comprising:

means for monitoring the access request signals on the system bus to trap a current bus cycle when the bus slave is non-accessible and for generating an interrupt signal to be input into the bus master in order to discontinue operation of an application, said monitoring and generating means includes
first means for storing data, address and status information of the current bus cycle, and
second means for subsequently reading and storing said data, address and status information wherein the address information is read in order to determine which device caused the trapped bus cycle.

2. The device according to claim 1, wherein said first means for storing includes a plurality of registers coupled to the system bus.

3. The device according to claim 2, wherein said second means for reading and storing includes a port and a corresponding register for obtaining said data, address and status information from said first means for storing.

4. The device according to claim 3, wherein said corresponding register is capable of storing at least eight bits of information for every read cycle.

5. The device according to claim 4, wherein said corresponding register includes a bit indicating whether each of said plurality of registers contain valid data.

6. The device according to claim 5, wherein said corresponding register further includes a plurality of bits containing information regarding which bytes of data are valid.

7. The device according to claim 3, wherein the port resides in an address location with an index address space of the monitoring and generating means.

8. The device according to claim 4, wherein the corresponding register resides in the monitoring and generating means.

9. The device of claim 1 being implemented on a computer system further comprising:

   means for processing bus cycles being coupled to said bus; and
   means for receiving bus cycles being coupled to said bus.

10. The device according to claim 9, wherein said means for monitoring and generating being coupled to said means for processing through a line propensity the interrupt signal.

11. A method for managing power within a computer system being controlled by a bus agent, said method comprising the step of:

   servicing a system management interrupt including the steps of:

   reading status information from a plurality of system management shadow registers in order to ascertain a reason for a system management interrupt,
reading address information within the plurality of system management shadow registers in order to determine which device caused a trapped I/O bus cycle, and
retrieving data sequentially from the plurality of system management shadow registers by repeatedly accessing a system management shadow port and a corresponding system management shadow port register.

12. The method according to claim 11 wherein prior to servicing the system management interrupt, the method further comprising:

   placing an address of a selected I/O device that the bus agent is attempting to access onto an internal system bus;
   determining whether the address of the selected I/O device falls within a predetermined address trap range;
   disabling the bus agent from prematurely terminating the I/O bus cycle;
   generating the system management interrupt;
   transmitting the system management interrupt into a central processing unit through a system management interrupt signal line in order to invoke a system management interrupt service routine;
   disabling the plurality of system management shadow registers containing data; address and status information of a current bus cycle for use by the system management interrupt service routine; and
   deasserting the trap signal allowing the bus agent to terminate the bus cycle after a predetermined time period.

13. The method according to claim 12, wherein after servicing the system management interrupt, the method further comprising:

   receiving an active ready signal from the selected I/O device indicating that the selected I/O device is powered-on; and
   generating the active ready signal if the active ready signal has not been returned by the selected I/O device within a predetermined time period.

**Patentansprüche**

1. Eine Spannungsversorgungsmanagementeinrichtung, die in Kombination mit einer Softwareanwendung arbeitet, um Zugriffsanforderungssignale auf einem Systembus aus einem Bus-Master zu einem Bus-Slave zu überwachen, wobei die Spannungsversorgungsmanagementeinrichtung aufweist:

Mittel zum Überwachen der Zugriffsanforderungssignale auf dem Systembus, um einen aktuellen Buszyklus abzufangen (trap), wenn der Bus-Slave nicht zugreifbar ist, und zum Erzeugen eines Interrupt-Signals, das in den Bus-Master einzugeben ist, um den Betrieb einer Anwendung zu unterbrechen, wobei die Mittel zum Überwachen und zum Erzeugen enthalten:

erste Mittel zum Speichern von Daten-, Adreß- und Statusinformationen des aktuellen Buszyklus und

zweite Mittel zum nachfolgenden Lesen und Speichern der Daten-, Adreß- und Statusinformationen, wobei die Adreßinformationen gelesen werden, um zu bestimmen, welche Einrichtung den abgefangenen (trapped) Buszyklus verursacht hat.

2. Die Einrichtung nach Anspruch 1, wobei die ersten Mittel zum Speichern eine Mehrzahl von mit dem Systembus gekoppelten Registern enthalten.

3. Die Einrichtung nach Anspruch 2, wobei die zweiten Mittel zum Lesen und Speichern einen Port und ein zugehöriges Register zum Erlangen der Daten-, Adreß- und Statusinformationen aus den ersten Mitteln zum Speichern enthalten.

4. Die Einrichtung nach Anspruch 3, wobei das zugehörige Register in der Lage ist, wenigstens acht Bits Informationen für jeden gelesenen Zyklus zu speichern.

5. Die Einrichtung nach Anspruch 4, wobei das zugehörige Register ein Bit enthält, das anzeigt, ob jedes der mehreren Register gültige Daten enthält.

6. Die Einrichtung nach Anspruch 5, wobei das zugehörige Register ferner eine Mehrzahl von Bits enthält, die Informationen darüber enthalten, welche Bytes der Daten gültig sind.

7. Die Einrichtung nach Anspruch 3, wobei sich der Port in einem Adreßplatz in einem Indexadreßraum der Überwachungs- und Erzeugungsmittel aufhält.

8. Die Einrichtung nach Anspruch 4, wobei sich das zugehörige Register in den Überwachungs- und Erzeugungsmitteln aufhält.

9. Die Einrichtung nach Anspruch 1, implementiert auf einem Computersystem und ferner aufweisend:

mit dem Bus gekoppelte Mittel zum Verarbeiten von Buszyklen; und
mit dem Bus gekoppelte Mittel zum Empfangen von Buszyklen.

10. Die Einrichtung nach Anspruch 9, wobei die Mittel zum Überwachen und Erzeugen mit den Mitteln zum Verarbeiten über eine das Interrupt-Signal übermittelnde Leitung gekoppelt sind.

11. Ein Verfahren zum Verwalten der Spannungsversorgung in einem Computersystem, das von einem Busteilnehmer kontrolliert wird, wobei das Verfahren die Schritte umfaßt:

Bedienen eines Systemmanagement-Interrupts, einschließend die Schritte:

Lesen von Statusinformationen aus einer Mehrzahl von Systemmanagement-Schattenregistern, um einen Grund für ein Systemmanagement-Interrupt festzustellen,
Lesen von Adreßinformationen in der Mehrzahl von Systemmanagement-Schattenregistern, um zu bestimmen, welche Einrichtung einen abgefangenen (trapped) I/O-Buszyklus verursacht hat, und
Wiedergewinnen von Daten sequentiell aus der Mehrzahl von Systemmanagement-Schattenregistern durch wiederholtes Zugreifen auf einen Systemmanagement-Schatten-Port und ein zugehöriges Systemmanagement-Schatten-Port-Register.

12. Das Verfahren nach Anspruch 11, wobei vor dem Bedienen des Systemmanagement-Interrupts das Verfahren ferner umfaßt:

Plazieren einer Adresse einer ausgewählten I/O-Einrichtung, auf die der Busteilnehmer versucht zuzugreifen, auf einen internen Systembus;
Bestimmen, ob die Adresse der ausgewählten I/O-Einrichtung in einen vorgegebenen Adreßabfangbereich fällt;
Hindern des Busteilnehmers am vorzeitigen Abbrechen des I/O-Buszyklus;
Erzeugen des Systemmanagement-Interrupts;
Übermitteln des Systemmanagement-Interrupts in eine zentrale Verarbeitungseinheit über eine Systemmanagement-Interrupt-Signalleitung, um eine Systemmanagement-Interrupt-Bedienungsroutine aufzurufen;
Sperren der Mehrzahl von Systemmanagement-Schattenregistern, die Daten-, Adreß- und Statusinformationen eines aktuellen Buszyklus enthalten, gegenüber einer Verwendung durch die Systemmanagement-Interrupt-Bedienungsroutine; und

Wegnehmen des Abfangsignals (Trap-Signals) nach einer vorgegebenen Zeitdauer, was es dem Busteilnehmer ermöglicht, den Buszyklus zu beenden.

**13.** Das Verfahren nach Anspruch 12, wobei nach dem Bedienen des Systemmanagement-Interrupts das Verfahren ferner umfaßt:

Empfangen eines aktiven Bereit-Signals aus der ausgewählten I/O-Einrichtung, das anzeigt, daß die ausgewählte I/O-Einrichtung eingeschaltet ist; und

Erzeugen des aktiven Bereit-Signals, sofern das aktive Bereit-Signal nicht von der ausgewählten I/O-Einrichtung innerhalb einer vorgegebenen Zeitperiode zurückgegeben worden ist.

## Revendications

**1.** Un dispositif de gestion d'alimentation agissant en combinaison avec une application logicielle pour la surveillance des signaux de requête d'accès sur un bus système, à partir d'un maître du bus *(bus master)* vers un esclave du bus *(bus slave)*, ledit dispositif de gestion d'alimentation comprenant :

des moyens pour la surveillance des signaux de requête d'accès sur le bus système pour dérouter un cycle de bus en cours lorsque l'esclave du bus est non accessible et pour la génération d'un signal d'interruption à fournir en entrée au maître du bus, afin d'interrompre le fonctionnement d'une application, lesdits moyens de surveillance et de génération comportant

un premier moyen de stockage des informations de données, d'adresse et d'état, du cycle de bus en cours, et

un deuxième moyen pour la lecture et le stockage ultérieurs desdites informations de données, d'adresse et d'état, dans lequel les informations d'adresse sont lues, afin de déterminer quel périphérique a causé le déroutement du cycle de bus.

**2.** Le dispositif selon la revendication 1, dans lequel ledit premier moyen de stockage comprend une pluralité de registres couplés au bus système.

**3.** Le dispositif selon la revendication 2, dans lequel ledit deuxième moyen de lecture et de stockage comprend un port et un registre correspondant pour l'obtention desdites informations de données, d'adresse et d'état, à partir dudit premier moyen de stockage.

**4.** Le dispositif selon la revendication 3, dans lequel ledit registre correspondant est capable de stocker au moins huit bits d'information pour chaque cycle de lecture.

**5.** Le dispositif selon la revendication 4, dans lequel ledit registre correspondant comprend un bit indiquant si chacun parmi ladite pluralité de registres contient des données valides.

**6.** Le dispositif selon la revendication 5, dans lequel ledit registre correspondant comprend en outre une pluralité de bits contenant des informations servant à savoir quels octets de données sont valides.

**7.** Le dispositif selon la revendication 3, dans lequel le port réside dans un emplacement d'adresse avec un espace d'adressage d'index du moyen de surveillance et de génération.

**8.** Le dispositif selon la revendication 4, dans lequel le registre correspondant réside dans le moyen de surveillance et de génération.

**9.** Le dispositif de la revendication 1 étant mis en oeuvre sur un système informatique comprenant en outre :

un moyen pour le traitement des cycles de bus couplé audit bus ; et
un moyen pour la réception des cycles de bus étant couplé audit bus.

**10.** Le dispositif selon la revendication 9, dans lequel ledit moyen de surveillance et de génération étant couplé audit moyen pour le traitement du signal d'interruption sur une tendance linéaire.

**11.** Un procédé pour la gestion de l'alimentation au sein d'un système informatique étant contrôlé par un agent de bus, ledit procédé comprenant l'étape consistant à :

prendre en charge une interruption de gestion du système, comportant les étapes consistant à :

lire les informations d'état à partir d'une pluralité de registres miroirs (*shadow registers*) de gestion du système, afin d'établir une raison pour une interruption de gestion du système,
lire les informations d'adresse au sein de la pluralité de registres miroirs de gestion du système, afin de déterminer quel périphérique a provoqué un cycle dérouté de bus d'E/S (entrée/sortie), et

récupérer séquentiellement des données à partir de la pluralité de registres miroirs de gestion du système, en accédant de façon répétitive à un port miroir de gestion du système et à un registre correspondant du port auxiliaire de gestion du système.

12. Le procédé selon la revendication 11 dans lequel, avant la prise en charge de l'interruption de gestion du système, le procédé comprend en outre les étapes consistant à :

placer une adresse d'un périphérique d'E/S sélectionné, auquel l'agent de bus tente d'accéder sur un bus système interne ;

déterminer si l'adresse du périphérique d'E/S sélectionné tombe au sein d'une plage prédéterminée de déroutement d'adresse ;

empêcher l'agent de bus de mettre fin prématurément au cycle de bus d'E/S ;

générer l'interruption de gestion du système ;

transmettre l'interruption de gestion du système vers une unité centrale de traitement au moyen d'une ligne de signal d'interruption de gestion du système, afin d'invoquer un sous-programme de service d'interruption de gestion du système ;

désactiver la pluralité des registres miroirs de gestion du système contenant des informations de données, d'adresse et d'état, d'un cycle de bus en cours pour utilisation par le sous-programme de prise en charge de l'interruption de gestion du système ; et

infirmer le signal de déroutement permettant à l'agent de bus de terminer le cycle de bus après une période de temps prédéterminée.

13. Le procédé selon la revendication 12 dans lequel, après la prise en charge de l'interruption de gestion du système, le procédé comprend en outre :

la réception d'un signal prêt actif, à partir du périphérique d'E/S sélectionné indiquant que le périphérique d'E/S sélectionné est sous tension ; et

la génération d'un signal prêt actif, si le signal prêt actif n'a pas été renvoyé par le périphérique d'E/S sélectionné dans une période de temps prédéterminée.

*Fig. 1*

(Prior Art)

Fig. 2

Fig. 3

*Fig. 4*

EP 0 811 197 B1

*Fig. 5*

START

Bus Cycle for
a Bus Agent?

N

Bus agent asserts a
FRAME signal and places
an address of the desired
I/O device onto the
system bus

STEP 3

Y

Asserts SADS
signal line.

STEP 1

Bus agent places an
address of a desired
I/O device onto the
system bus.

STEP 2

Address
within
trap range?

STEP 4

N

END

Y

PMM claims
the bus cycle.

STEP 5

Asserts the
PMTRAPCYC
signal lines

STEP 6

Asserts the PSMI
signal line

STEP 7

Disables the SM
shadow registers.

STEP 8

Deasserts the
PMTRAPCYC signal
lines.

STEP 9

Accesses status
information
from the SM shadow
registers.

STEP 10

Accesses address
information
from the SM shadow
registers.

STEP 11

Accesses data
information
from the SM shadow
registers.

STEP 12

Waits for
a READY signal
from the desired I/O
device?

STEP 13

END

N

PMM internally
generates
the READY signal.

STEP 14

END